# EUROPEAN PATENT APPLICATION

(11) **EP 2 393 052 A1**
(43) Date of publication of application: **07.12.2011**
(21) Application number: 10461518.2
(22) Date of filing: 01.06.2010
(51) Int. Cl.: G06Q 10/00

(54) **System and method for preventive maintenance of marking devices**

(71) Applicant: Promark Sp. z o.o., 02-927 Warszawa (PL)
(72) Inventor: Jeuté, Piotr, 02-927, Warszawa (PL); Charlak, Sebastian, 99-300, Kutno (PL)
(74) Representative: Pawlowski, Adam

(57) **Abstract**

A system for preventive maintenance of marking devices (110, 210), comprising a data collector (121, 221) configured to inquire the marking devices (110, 210) about their working parameters in predetermined time intervals, an alert generator (122, 222) configured to generate alerts upon detecting a working parameter value outside a predetermined allowable range, a devices database (132, 232) configured to store configuration data of marking devices (110, 210), and an alert responser (133, 233) configured to generate alert responses based on received alerts and device configuration data.

## Description

### Description

The present invention relates to preventive maintenance of marking devices.

Marking devices are commonly used to apply, by printing or labeling, various identification codes to products during their manufacture, such as batch numbers, expiration dates, barcodes etc. Product marking is usually performed at the end of packaging process, wherein markings are applied to each manufactured, fully functional product. Therefore, proper maintenance of marking devices plays an essential role in the production process, as an interruption in operation of the marking device may stop the whole production line. Typical maintenance methods include systematic service of devices, timely exchange of components, but they prevent only failures related to typical wear and tear and do not prevent failures related to unexpected change of environmental situation.

A US patent application No. US2004/0234278 describes a system for managing office printers, comprising a management apparatus which receives use information, such as a number of print-outs, sent from a plurality of printers, discriminates whether preventive maintenance for the printing machine is needed or not and transmits instruction information to a terminal used by maintenance personnel. The management apparatus may communicate with the printers via a computer network. The use information is transmitted every time the printing machine performs the printing operation, and includes e.g. number of printouts being made during the operation, single/double side information, mono/colour print information. Therefore, such system allows only detecting excessive use of the machine after a printing operation. Such system can be useful for management of typical office printers, but does not offer satisfactory functionality with respect to marking devices used on production lines.

The aim of the present invention is to provide a system and method for preventive maintenance of marking devices, allowing continuous, real-time prevention of a wide range of failures with a limited amount of service personnel interaction.

The object of the invention is a system for preventive maintenance of marking devices, comprising a data collector configured to inquire the marking devices about their working parameters in predetermined time intervals, an alert generator configured to generate alerts upon detecting a working parameter value outside a predetermined allowable range, a devices database configured to store configuration data of marking devices, and an alert responser configured to generate alert responses based on received alerts and device configuration data.

The system may comprise a plurality of concentrators, each communicatively connected with a plurality of marking devices, each concentrator comprising a data collector and an alert generator, and a central management system communicatively connected with the concentrators and comprising an alert manager configured to receive alerts from the concentrators, the devices database and the alert responser.

At least one concentrator may further comprise a local database configured to store the working parameters collected from the marking devices.

At least one concentrator may further comprise a communications manager configured to block transmission of predetermined data from the concentrator to the central management system.

The data collector can be configured to operate according to predetermined tasks, wherein each task defines an identifier of a marking device, at least one working parameter to be inquired and an inquiry frequency.

The system may further comprise an operator console configured to present alerts and device configuration data to an operator and to allow manual alert response generation.

The system may further comprise a plurality of service personnel consoles, each associated with one or more marking devices, and wherein the alert responser is further configured to transmit the alert response to service personnel consoles.

The system may further comprise a response manager configured to receive alert responses from the alert responser and to transmit the alert response to the marking device identified by the alert response.

The object of the invention is also a method for preventive maintenance of marking devices, comprising the steps of collecting working parameters of marking devices by inquiring the marking devices about the working parameters in predetermined time intervals, generating alerts upon detecting a working parameter value outside a predetermined allowable range, and generating alert responses based on alerts and predefined configuration data of marking devices.

The method may further comprise the steps of communicatively connecting groups of marking devices to concentrators and communicatively connecting concentrators to a central management system, collecting working parameters of marking devices and generating alerts within the concentrators, and receiving alerts and generating alert responses within the central management system.

The method may further comprise the step of storing the working parameters collected from the marking devices in a local database in at least one concentrator.

The method may further comprise the step of blocking transmission of predetermined data from the concentrator to the central management system in a communications manager of at least one concentrator.

The method may further comprise the step of controlling the operation of the data collector according to predetermined tasks, wherein each task defines an identifier of a marking device, at least one working parameter to be inquired and an inquiry frequency.

The method may further comprise the step of presenting alerts and device configuration data to an operator and to allow manual alert response generation via an operator console.

The method may further comprise the step of transmitting the alert response to the marking device identified by the alert response.

The invention is shown by means of exemplary embodiments on a drawing, in which:
Fig. 1 shows a structure of one embodiment of the system according to the invention;
Fig. 2 shows a structure of another embodiment of the system according to the invention;
Fig. 3 shows an operator console of a central management system.

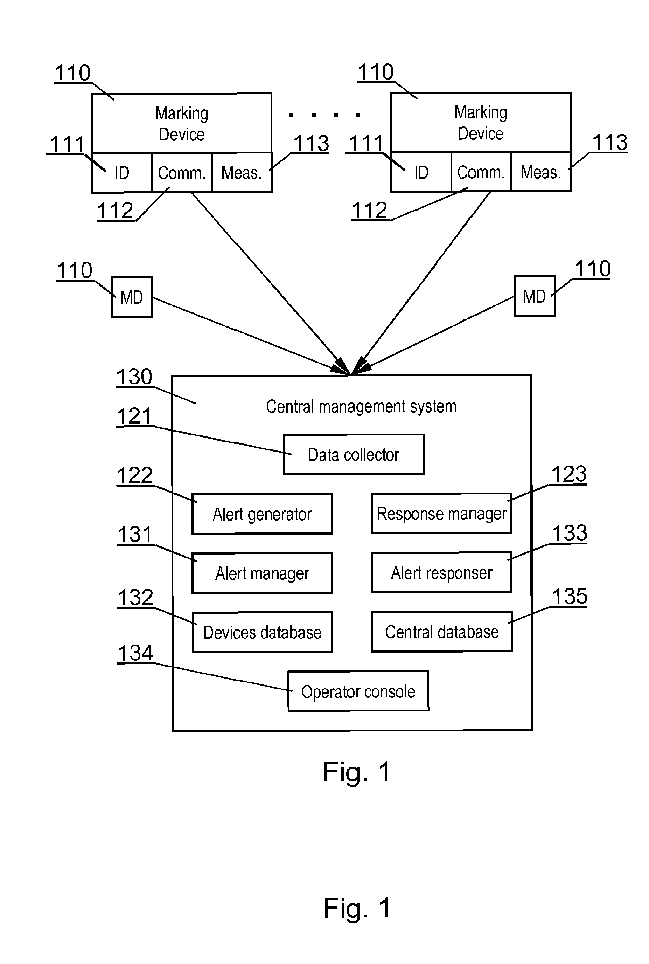

Fig. 1 shows a structure of one embodiment of the system according to the invention. The system can be used for preventive maintenance of a multitude of marking devices 110 installed in many locations, such as distinct production facilities. All marking devices are communicatively connected to a central management system 130.

Each marking device 110 is communicable via a bidirectional communication port 112, preferably a standardized network communication port. In case a device does not have networking communication functionality, for example it is communicable only via a proprietary communication port, a network adapter may be connected to the device to serve as the communication port 112. Each marking device 110 has a device identifier 111, which can include a device serial number and preferably a number of other identifiers, such as a network address, for example an IP address.

Furthermore, some or all of the marking devices 110 may be coupled with an external measurement apparatus 113, such as an oscilloscope for measuring parameters of signals within the device, a thermometer for monitoring temperature of specific components of the device or environment, a camera for monitoring the markings applied by the device and/or other applicable accessories.

The system according to the invention can be used for preventive maintenance of different types of marking devices 110, i.e. printing or labeling devices, such as continuous ink jet printers, drop on demand ink jet printers, laser coders, thermal transfer printers, RFID tag programming devices, automatic labeling heads, provided that the device allows access to information on its working parameters. For example, the device may provide the current value of its working parameters in response to a request sent via a communication protocol specific to the device. Moreover, some working parameters can be output automatically, without previous request. The set of accessible working parameters can vary between devices, i.e. some devices may allow access to more working parameters than other devices. Moreover, different types of devices have different types of working parameters.

For example, a typical set of working parameters provided by an ink jet printer may include:
- TOF (Time of Flight) - defining the time of flight of a single ink jet droplet. Values of TOF outside a specific range may indicate inadequate ink viscosity or may be caused for example by the vibrations of the parent machine or poor drop break-up caused by incorrect modulation or ink viscosity.
- Modulation - defining the spacing between the drops of ink from the nozzle. Values of modulation outside a specific range may indicate for example inadequate ink density or may be caused by the addition of different types of inks or chemicals to the ink.
- Phase - defining the method of control of the synchronization between the drop ink charge and the jet break-up time. Values of phase outside a specific range may be caused for example by lack of jet, poor jet break-up, jet misalignment, faulty phase amplifier on IPM PCB.
- Pressure - defining pressure required to achieve the correct TOF Values. Values of pressure outside a specific range may indicate inadequate ink density or may be caused for example by the nozzle blockage or ink dip tube blockage. For example, if the pressure is more than 200 normalized units, the printer may stop printing.
- Head Temperature - defining local printhead temperature. Values of temperature outside a specific range may indicate that environment temperature is too high. This may contribute to increased consumption of solvent. For example, if a local printhead temperature exceeds 60 °C, the printer can be immediately shut down in a controlled way.

A typical set of working parameters provided by a thermal transfer printer may include:
- Darkness - defining the darkness of the print. Values of darkness level above a threshold may indicate premature printhead wear or print quality problems.
- Printhead Temperature - defining the temperature of the printhead. Values of temperature outside a specific range may indicate overheating of the printhead.
- Printer Status - defining the current status of the printer.
- Faults - defining current faults reported by the printer.
- Warnings - defining current warnings reported by the printer, for example an over speed warning, which might lead to missing imprints.

A typical set of working parameters provided by a laser coder may include:
- Laser Power - defining the power of the laser beam. Values of laser power level above a threshold may indicate that the laser tube needs to be refurbished.
- Laser Overheat - indicating laser overheating, which may be caused by a faulty operation of a cooling system or a dust filter.
- Coder Status - defining the current status of the laser coder.
- Faults - defining the current faults reported by the laser coder.
- Warnings - defining the current warnings reported by the laser coder, for example over speed warning, which might lead to missing imprints.

A typical set of working parameters provided by a label applicator may include:
- Current Level - defining the current level of the motor. In case the level is increased above a reference level it may indicate a blockage of drive rolls or inappropriate label roll unwinding process.
- Speed (labels/min) - defining the amount of labels applied per minute. Incorrect values may indicate possible over speed resulting in missing labels.
- Speed (m/min) - defining the linear speed in meters per minute. Incorrect values may indicate too high or too slow linear speed, resulting in incorrect position of the label on the product.
- Driver Temperature - defining the current motor driver temperature. Incorrect values may indicate label applicator overload or overheating due to a problem of a cooling system or a dust filter.

The central management system 130 comprises a data collector 121, configured to inquire the marking devices 110 or associated measurement apparatus 113 about working parameters in predetermined time intervals. The data collector 121 may operate according to a predefined set of tasks, wherein each task may define a device identifier, one or more working parameters and an inquiry frequency. A plurality of tasks may be defined for each device, having different inquiry frequencies, for example some parameters may be inquired more frequently than the others. For example, some of the parameters may be inquired once per second, other parameters may be inquired once per minute and other parameters may be inquired once per hour. The tasks of the data collector 121 may be defined via the operator console 134. An exemplary set of tasks of the data collector 121 may comprise:

| Device_ID | Parameters | Frequency |
|---|---|---|
| Dev_1 | TOF, Modulation, Phase | 1 per second |
| Dev_1 | Darkness | 1 per hour |
| Dev_2 | Darkness, Printhead temp. | 1 per minute |

The working parameters collected by the data collector 121 are analyzed by an alert generator 122, which is configured to generate alerts upon detecting a working parameter value outside a predetermined allowable range. The allowable range for each parameter can be defined individually for each device, as each device may have different properties (for example, different wear and tear) or may operate at different conditions (for example, more or less noisy environment) or may be used for different applications (for example, different type of products to be marked). An exemplary set of allowable values may comprise:

| Device_ID | Parameter | Min | Max |
|---|---|---|---|
| Dev_1 | TOF | 700 | 800 |
| Dev_2 | TOF | 750 | 850 |
| Dev_1 | Head Temperature | 0 | 60 |
| Dev_2 | Head Temperature | 0 | 65 |

In addition, generation of an alert may be based on comparison of a plurality of parameters or their relationships, which enables elaborate analysis of working parameters of the device.

Therefore, an alert will be generated in case the TOF parameter for device Dev_1 is below 700 or above 800. Similarly, an alert will be generated in case the Head Temperature for device Dev_1 exceeds 60 degrees.

An alert may have a form of a message, comprising the identifier of the marking device and an alert description. The alert description may comprise the working parameter identification and its value which exceeded the allowable range. The alerts may be generated repeatedly for each new working parameter value collected, therefore the frequency of alert generation may be equal to the frequency of parameter inquiries. Alternatively, an alert may be generated only once when the first irregularity has been detected. Furthermore, an alert may be delayed until a number of irregularities have been detected, in order to filter-out incidental irregularities. Therefore, an exemplary alert may have a form of:
{Dev_1; TOF; 900}.

An alert manager 131 is configured to receive alerts from the alert generator 122. The alerts may be stored at a central database 135 for keeping a history of operation of devices of the system and for using the history to improve future preventive actions. Moreover, the central database 135 may store a history of selected sub-set of working parameters for some or all of devices, in order to facilitate examination of certain kinds of alerts.

A devices database 132 is configured to store configuration data of marking devices 110. Each marking device, identifiable by its unique identifier, may be characterized by a plurality of parameters, such as a device type, a model name, a serial number, type of components installed (such as a type of printing head), operating conditions (humidity, temperature, workload) etc.

An alert responser 133 is configured to generate alert responses based on received alerts and device configuration data. The alert responser may operate according to predefined rules, for example:

| Device_ID | Parameter | Value | Response |
|---|---|---|---|
| Dev_1 | TOF | 800-1000 | Adapt another parameter |
| Dev_1 | TOF | >1000 | Send service personnel message |
| Dev_1 | TOF | >2000 | Stop the device |

In addition, a response may be based on comparison of a plurality of parameters or their relationships, which enables generation of efficient responses.

A response of the type "adapt another parameter" involves a command to be sent to a device via a response manager 223. The response manager 123 is configured to translate the command included in the response to a device-specific protocol (if necessary, i.e. if the command has a format other than the format handled by the device), and to transmit the command to the marking device 110 identified by the alert response. The command may involve for example increasing the amount of solvent used by an ink jet printer, adapting an operating temperature of some components, adapting a voltage, etc.

A response of the type "send service personnel message" involves a message to be sent to a service personnel console 140 associated with a given device, in order for a direct intervention to be taken.

A response may be delayed with respect to a value set for an alert. For example, an alert may be configured to be generated when the ink pressure exceeds 5% of the reference value (of 180 for instance), while a response may be generated only when this value exceeds 10% of the reference value detected without a maintenance action being taken on time. Similar escalation procedure might be applied in case of low solvent level for instance. An alert may be configured to be generated in case the solvent is not added by the operator within more than an hour from the first warning signal on the marking device, while a response may be generated when after two hours from the first warning signal on the printer solvent level is still too low.

The alert responser rules may be more elaborate than the ones presented in the table. For example, the rules may involve comparison of more than one parameter, comparison of the parameters with device configuration, comparison of the current parameter value with its historical values etc.

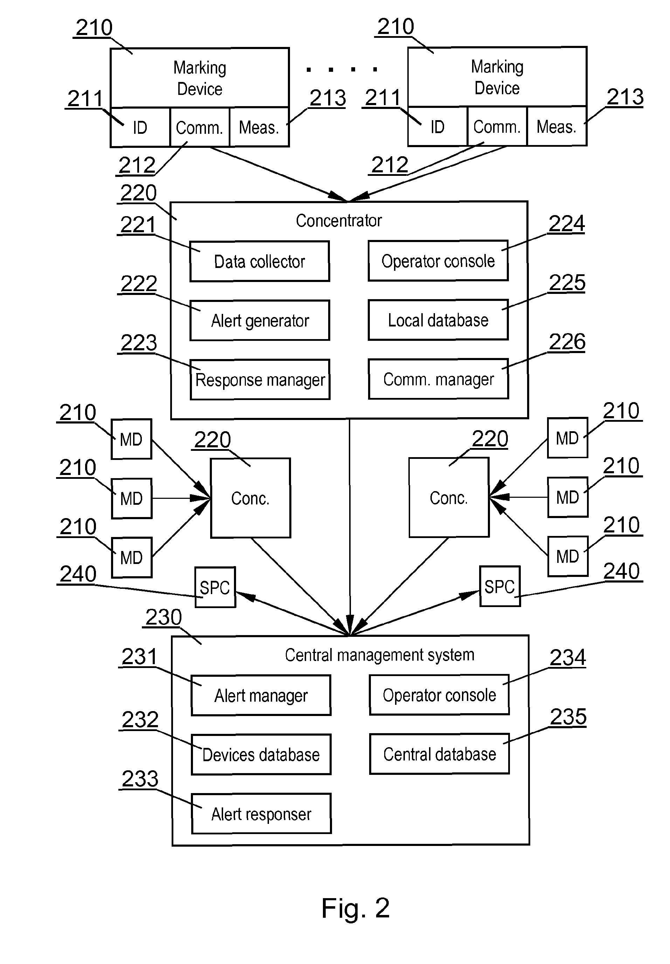

Fig. 2 shows a structure of another embodiment of the system according to the invention. The system can be used for preventive maintenance of a multitude of marking devices 210 installed in many locations, such as distinct production facilities. The marking devices 210 at each location are connected to a concentrator 220. The concentrators of 220 all locations are connected to a central management system 230.

The configuration of marking devices 210 is similar to that of marking devices 110 shown in Fig. 1. Each marking device 210 is communicable via a bidirectional communication port 212, preferably a standardized network communication port. In case a device does not have networking communication functionality, for example it is communicable only via a proprietary communication port, a network adapter may be connected to the device to serve as the communication port 212. Each marking device 210 has a device identifier 211, which can include a device serial number and preferably a number of other identifiers, such as a network address, for example an IP address.

Furthermore, some or all of the marking devices 210 may be coupled with an external measurement apparatus 213, such as an oscilloscope for measuring parameters of signals within the device, a thermometer for monitoring temperature of specific components of the device or environment, a camera for monitoring the markings applied by the device and/or other applicable accessories.

Each concentrator 220 comprises a data collector 221, configured to inquire the marking devices 210 or associated measurement apparatus 213 about working parameters in predetermined time intervals, in a way similar to the data collector 121 shown in Fig. 1. The tasks of the data collector may be defined directly by an operator of the concentrator 220 via a local operator console 224 or remotely by a central management system 230.

The working parameters collected by the data collector 221 may be stored in a local database 225. The local database 225 may store all or selected parameters. The number of records per parameter or the period for which the parameters are to be stored can be defined for each parameter separately.

The working parameters collected by the data collector 221 or stored in the local database 225 are analyzed by an alert generator 222, which is configured to generate alerts upon detecting a working parameter value outside a predetermined allowable range, in a way similar to the alert generator 122 of Fig. 1.

The concentrator 220 comprises a communications manager 226 used to manage communication with the central management system 230, including transmission of the alerts and working parameters, reception of responses and filtering of transmitted data. The operator of the concentrator 220 may block transmission of predetermined data, such as some of the working parameters or some of alerts, in order to keep confidentiality of information. However, the confidential parameters may be still kept stored in the local database, in order to allow their analysis by local personnel.

All concentrators 220 are connected to the central management system 230 via a network, for example the Internet. The central management system is used to collect alerts and working parameters data from all concentrators, analyze them and generate responses.

The central management system 230 comprises an alert manager 231 configured to receive alerts from the concentrators 220. The alerts may be stored at a central database 235 for keeping a history of operation of devices of the system and for using the history to improve future preventive actions. Moreover, the central database 235 may store a history of selected sub-set of working parameters for some or all of devices, in order to facilitate examination of certain kinds of alerts.

A devices database 232 is configured to store configuration data of marking devices 210. Each marking device, identifiable by its unique identifier, may be characterized by a plurality of parameters, such as a device type, a model name, a serial number, type of components installed (such as a type of printing head), operating conditions (humidity, temperature, workload) etc.

An alert responser 233 is configured to generate alert responses based on received alerts and device configuration data, similarly to the alert responser 133 of Fig. 1. The alert responses can be sent to a concentrator to which a given device is connected, where it is received by a response manager 223. The response manager 223 is configured to translate the command included in the response to a device-specific protocol (if necessary, i.e. if the command has a format other than the format handled by the device), and to transmit the command to the marking device 210 identified by the alert response, similarly to the response manager 123 of Fig. 1.

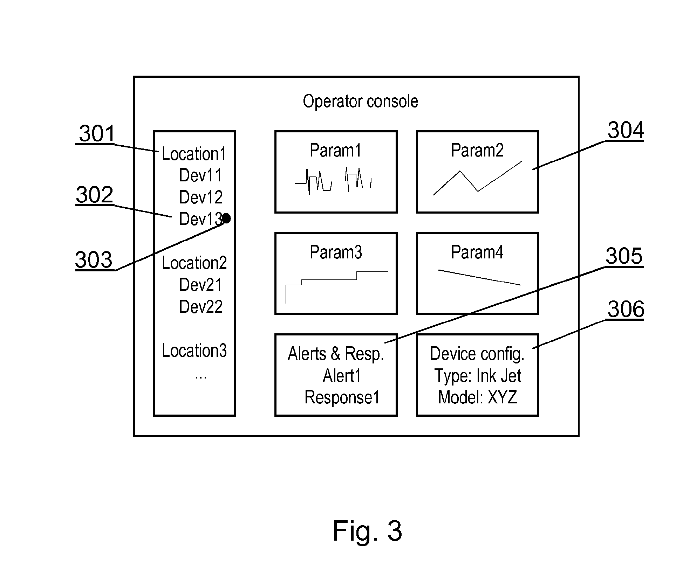

The system may be configured and used via an operator console 134, 234 of the central management system 130, 230, configured to present to the operator the current status of devices, alerts and working parameters. The operator console 134, 234 may comprise a screen displaying data arranged for example as shown in Fig. 3. In case of the embodiment of Fig. 2, for each concentrator 301, usually defining a single location, a list of devices 302 attached to it can be presented. In case an alert has been generated for a device, it can be indicated by a flag 303. For a selected device, a history of its operating parameters can be presented in a plurality of windows 304. Moreover, the current and previous alerts and responses may be presented in another window 305. In order to help the operator identify the device, device configuration data may be shown in window 306.

The individual elements of the system can be implemented as individual devices handling their dedicated functionality or as software modules run on one or more computers.

The system according to the invention offers highly efficient preventive maintenance of a multitude of marking devices which can be installed in many locations. Collecting working parameters of marking devices in regular time intervals allows efficient preventive maintenance, as the change of one or more parameters may indicate an upcoming device failure, which can be timely prevented. Moreover, the working parameters of devices, such as TOF, modulation or voltage levels, in contrast to use parameters such as the number of pages printed, allow precise identification of many upcoming faults of the device. By using local concentrators, the amount of data transmitted to the central management system is reduced, as the concentrators can filter typical working parameters and issue alerts only when a working parameter exceeds an allowable range. This facilitates inquiring the marking devices about their working parameters with high frequency, thereby resulting in quick detection of deviating values of parameters, which may suggest upcoming failures. Moreover, some sensitive data does not have to be provided to the central management system, therefore the confidentiality of printing process at individual production lines is kept. Therefore, the system can be used to manage production lines of various manufacturers, even directly competing with each other. In case of typical alerts, an automatic alert responser at the central management system may generate proper responses to be passed to the marking devices or service personnel consoles to remedy the situation. Furthermore, by collecting alerts from many different devices operating in different environments, a large database of knowledge can be created, wherein data related to faults in one location may be used in future to prevent failures in other locations. Therefore, it is advantageous if the system comprises a large number of marking devices, which allows collecting substantial amounts of working parameters data and creating a large database related to operation of marking devices.

## Claims

1. A system for preventive maintenance of marking devices (110, 210), comprising
- a data collector (121, 221) configured to inquire the marking devices (110, 210) about their working parameters in predetermined time intervals,
- an alert generator (122, 222) configured to generate alerts upon detecting a working parameter value outside a predetermined allowable range,
- a devices database (132, 232) configured to store configuration data of marking devices (110, 210), and
- an alert responser (133, 233) configured to generate alert responses based on received alerts and device configuration data.

2. The system according to claim 1, comprising
- a plurality of concentrators (220), each communicatively connected with a plurality of marking devices (210), each concentrator comprising a data collector (221) and an alert generator (222),
- a central management system (230) communicatively connected with the concentrators (220) and comprising an alert manager (231) configured to receive alerts from the concentrators (220), the devices database (232) and the alert responser (233).

3. The system according to claim 2, wherein at least one concentrator (220) further comprises a local database (225) configured to store the working parameters collected from the marking devices (210).

4. The system according to any of claims 2-3, wherein at least one concentrator (220) further comprises a communications manager (226) configured to block transmission of predetermined data from the concentrator (220) to the central management system (230).

5. The system according to any of previous claims, wherein the data collector (121, 221) is configured to operate according to predetermined tasks, wherein each task defines an identifier of a marking device (110, 210), at least one working parameter to be inquired and an inquiry frequency.

6. The system according to any of previous claims, further comprising an operator console (134, 234) configured to present alerts and device configuration data to an operator and to allow manual alert response generation.

7. The system according to any of previous claims, wherein the system further comprises a plurality of service personnel consoles (140, 240), each associated with one or more marking devices (110, 210), and wherein the alert responser (133, 233) is further configured to transmit the alert response to service personnel consoles (140, 240).

8. The system according to any of previous claims, further comprising a response manager (123, 223) configured to receive alert responses from the alert responser (133, 233) and to transmit the alert response to the marking device (110, 210) identified by the alert response.

9. A method for preventive maintenance of marking devices (110, 210), comprising the steps of:
- collecting working parameters of marking devices (110, 210) by inquiring the marking devices about the working parameters in predetermined time intervals,
- generating alerts upon detecting a working parameter value outside a predetermined allowable range, and
- generating alert responses based on alerts and predefined configuration data of marking devices (110, 210).

10. The method according to claim 9, further comprising the steps of
- communicatively connecting groups of marking devices (210) to concentrators (220) and communicatively connecting concentrators (220) to a central management system (230),
- collecting working parameters of marking devices (210) and generating alerts within the concentrators (220),
- receiving alerts and generating alert responses within the central management system (230).

11. The method according to claim 10, further comprising the step of storing the working parameters collected from the marking devices (210) in a local database (225) in at least one concentrator (220).

12. The method according to any of claims 10-11, further comprising the step of blocking transmission of predetermined data from the concentrator (220) to the central management system (230) in a communications manager (226) of at least one concentrator (220).

13. The method according to any of claims 9-12, further comprising the step of controlling the operation of the data collector (121, 221) according to predetermined tasks, wherein each task defines an identifier of a marking device (110, 210), at least one working parameter to be inquired and an inquiry frequency.

14. The method according to any of claims 9-13, further comprising the step of presenting alerts and device configuration data to an operator and to allow manual alert response generation via an operator console (134, 234).

15. The method according to any of claims 9-14, further comprising the step of transmitting the alert response to the marking device (110, 210) identified by the alert response.

## Amended claims

### Amended claims in accordance with Rule 137(2) EPC.

**1.** A system for preventive maintenance of marking devices (110, 210) installed in a production line and configured to apply identification codes to products, comprising
- a data collector (121, 221) configured to inquire the marking devices (110, 210) about their working parameters values in predetermined time intervals,
- an alert generator (122, 222) configured to analyze the working parameters individually by comparing each parameter value with a predetermined allowable range specifying an allowable minimum and an allowable maximum value for the particular parameter and to generate alerts upon detecting a working parameter value outside the predetermined allowable range,
- a devices database (132, 232) configured to store configuration data of marking devices (110, 210), and
- an alert responser (133, 233) configured to generate alert responses of a type based on received alerts, values of parameters and device configuration data.

**2.** The system according to claim 1, comprising
- a plurality of concentrators (220), each communicatively connected with a plurality of marking devices (210), each concentrator comprising a data collector (221) and an alert generator (222),
- a central management system (230) communicatively connected with the concentrators (220) and comprising
○ an alert manager (231) configured to receive alerts from the concentrators (220),
○ the devices database (232) configured to store configuration data of marking devices (210) connected with the concentrators (220) and
○ the alert responser (233) configured to generate alert responses for the marking devices (210) connected with the concentrators (220) of a type based on alerts received from the alert generators (222), values of parameters and device configuration data stored in the devices database (232).

**3.** The system according to claim 2, wherein at least one concentrator (220) further comprises a local database (225) configured to store the working parameters collected from the marking devices (210).

**4.** The system according to any of claims 2-3, wherein at least one concentrator (220) further comprises a communications manager (226) configured to block transmission of predetermined data from the concentrator (220) to the central management system (230).

**5.** The system according to any of previous claims, wherein the data collector (121, 221) is configured to operate according to predetermined tasks, wherein each task defines an identifier of a marking device (110, 210), at least one working parameter to be inquired and an inquiry frequency.

**6.** The system according to any of previous claims, further comprising an operator console (134, 234) configured to present alerts and device configuration data to an operator and to allow manual alert response generation.

**7.** The system according to any of previous claims, wherein the system further comprises a plurality of service personnel consoles (140, 240), each associated with one or more marking devices (110, 210), and wherein the alert responser (133, 233) is further configured to transmit the alert response to service personnel consoles (140, 240).

**8.** The system according to any of previous claims, further comprising a response manager (123, 223) configured to receive alert responses from the alert responser (133, 233) and to transmit the alert response to the marking device (110, 210) identified by the alert response.

**9.** A method for preventive maintenance of marking devices (110, 210) installed in a production line and configured to apply identification codes to products, comprising the steps of:
- collecting values of working parameters of marking devices (110, 210) by inquiring the marking devices about the working parameters in predetermined time intervals,
- analyzing the working parameters individually by comparing each parameter value with a predetermined allowable range specifying an allowable minimum and an allowable maximum value for the particular parameter and generating alerts upon detecting a working parameter value outside the predetermined allowable range, and
- generating alert responses of a type based on alerts, values of parameters and predefined configuration data of marking devices (110, 210).

**10.** The method according to claim 9, further comprising the steps of
- communicatively connecting groups of marking devices (210) to concentrators (220) and communicatively connecting concentrators (220) to a central management system (230),
- collecting working parameters of marking devices (210) and generating alerts within the concentrators (220),
- storing configuration data of marking devices (210) connected with the concentrators (220) in a devices database (232)
- receiving alerts and generating alert responses within the central management system (230), wherein the response type is based on received alerts, values of parameters and device configuration data stored in the devices database (232).

**11.** The method according to claim 10, further comprising the step of storing the working parameters collected from the marking devices (210) in a local database (225) in at least one concentrator (220).

**12.** The method according to any of claims 10-11, further comprising the step of blocking transmission of predetermined data from the concentrator (220) to the central management system (230) in a communications manager (226) of at least one concentrator (220).

**13.** The method according to any of claims 9-12, further comprising the step of controlling the operation of the data collector (121, 221) according to predetermined tasks, wherein each task defines an identifier of a marking device (110, 210), at least one working parameter to be inquired and an inquiry frequency.

**14.** The method according to any of claims 9-13, further comprising the step of presenting alerts and device configuration data to an operator and to allow manual alert response generation via an operator console (134, 234).

**15.** The method according to any of claims 9-14, further comprising the step of transmitting the alert response to the marking device (110, 210) identified by the alert response.
